**Europäisches Patentamt**

**European Patent Office**

**Office européen des brevets**

(19)

(11) Veröffentlichungsnummer: **0 205 911 B1**

(12) **EUROPÄISCHE PATENTSCHRIFT**

(45) Veröffentlichungstag der Patentschrift: **18.12.91**

(51) Int. Cl.⁵: **C01B 13/11**

(21) Anmeldenummer: **86106761.9**

(22) Anmeldetag: **17.05.86**

(54) **Einrichtung zur Ozonerzeugung und Verfahren zu deren Betrieb.**

(30) Priorität: **21.06.85 CH 2643/85**

(43) Veröffentlichungstag der Anmeldung:
**30.12.86 Patentblatt 86/52**

(45) Bekanntmachung des Hinweises auf die
Patenterteilung:
**18.12.91 Patentblatt 91/51**

(84) Benannte Vertragsstaaten:
**CH DE FR LI**

(56) Entgegenhaltungen:
**DE-A- 2 525 059**
**DE-A- 2 642 751**
**US-A- 4 051 043**

(73) Patentinhaber: **Ozonia AG**
**Schaffhauserstrasse 418**
**CH-8050 Zürich(CH)**

(72) Erfinder: **Erni, Peter, Dr.**
**Römerstrasse 34**
**CH-5400 Baden(CH)**
Erfinder: **Kirsch, Gerhard**
**Hönggerstrasse 90**
**CH-8037 Zürich(CH)**

(74) Vertreter: **Ottow, Jens M. et al**
**Asea Brown Boveri AG Abteilung REI-**
**Immaterialgüterrecht**
**CH-5401 Baden(CH)**

## Beschreibung

Bei der Erfindung wird ausgegangen von einer Einrichtung zur Ozonerzeugung nach dem Oberbegriff der Patentansprüche 1 und 2 sowie von einem Verfahren zu deren Betrieb nach dem Oberbegriff des Patentanspruchs 7.

Mit dem jeweiligen Oberbegriff nimmt die Erfindung auf einen Stand der Technik Bezug, wie er aus der US-A-4,051,043 bekannt ist. Dort ist ein Ozonerzeuger an die Sekundärseite eines Hochspannungstransformators angeschlossen, der primärseitig über Dioden aus einer Gleichstromquelle gespeist ist. Mittels Transistoren kann die Frequenz und Impulslänge des Speisestromes gesteuert werden. Parallel zum Ozonerzeuger ist eine Kompensationsdrossel geschaltet, die zusammen mit dem Ozonerzeuger einen Resonanzschwingkreis bildet. Die Schaltung ist so ausgelegt, dass die Betriebsfrequenz der Anspeisung höher als die Resonanzfrequenz dieses Resonanzschwingkreises ist. Besondere Massnahmen in der Startphase des Betriebs sind nicht angegeben.

Für industrielle Ozonerzeuger höherer Leistung gibt es hauptsächlich 2 Möglichkeiten der elektrischen Anspeisung:
- Anspeisung mit Netzfrequenz von 50 Hz bzw. 60 Hz und
- Anspeisung mit Mittelfrequenz von 200 HZ - 2 kHz.

Die Anspeisung mit Netzfrequenz, welche nur für Ozonerzeuger mit kleinen Leistungsdichten q (Leistung pro aktive Fläche) anwendbar ist, ist sehr einfach und besteht prinzipiell nur aus einem Stelltransformator und einem Hochspannungstransformator. Die Leistungsaufnahme des Ozonerzeugers kann durch Variation der Spannung variiert werden.

Bei Ozonerzeugern, die mit Mittelfrequenz gespeist werden, wird die Netzspannung mit einem gesteuerten Gleichrichter in einen Gleichstrom umgewandelt und anschliessend mit Hilfe eines Wechselrichters in einen Rechteckstrom mit Mittelfrequenz umgeformt. Dieser Strom mit der zugehörigen Spannung wird dann mit Hilfe eines Hochspannungstrafos auf die für den Betrieb des Ozonerzeugers notwendigen Werte transformiert. Eine Gleichstromdrossel zwischen Gleichrichter und Wechselrichter dient als Energiespeicher und als Trennung zwischen dem Niederfrequenzteil und dem Mittelfrequenzteil. In der DE-BI 25 25 059 (Anspruch 1) wird speziell darauf hingewiesen, dass die Gleichstromdrossel eine sehr hohe Induktivität haben muss, damit am Ozonerzeuger stets ein rechteckförmiger Strom anliegt, da dies die Ozonausbeute positiv beeinflusst. Die Leistungsaufnahme des Ozonerzeugers kann durch Variation des Gleichstromes, durch Variation der Frequenz, durch Variation der Rechteckbreite (Pulsbreite) oder durch eine Kombination obiger Grössen verändert werden.

Ein Nachteil beider Anspeisungsarten ist bedingt durch den schlechten Leistungsfaktor des Ozonerzeugers (cos φ = = 0,4 ... 0,5) was dazu führt, dass Anspeisungen überdimensioniert werden müssen. Die Auswirkungen des schlechten Leistungsfaktors auf das Netz können, falls erforderlich, durch eine netzseitige Kompensation vermindert werden.

Bei einer weiteren Vorrichtung zur Erzeugung von Ozon (DE-OS 21 11 041), bei welcher zwei mit den Polen einer Wechselspannungsquelle verbundene Elektroden durch ein festes Dielektrikum und eine Gasstrecke voneinander getrennt sind, ist zwischen die Wechselspannungsquelle und die Elektroden eine Induktivität von solcher Grösse eingeschaltet, dass einerseits die Eigenfrequenz des durch die Induktivität in Verbindung mit der Kapazität des festen Dielektrikums gebildeten Schwingkreises unterhalb der Betriebsfrequenz der Wechselspannungsquelle liegt, dass aber andererseits die Induktivität so bemessen ist, dass sie mit der durch die Reihenschaltung aus Dielektrikum und Gasstrecke gebildeten Kapazität einen Schwingkreis bildet, dessen Eigenfrequenz oberhalb der Betriebsfrequenz der Wechselspannungsquelle liegt.

Auf diese Weise wird durch Einsatz einer entsprechend grossen Induktivität erreicht, dass die Eigenfrequenz des Systems in gezündetem Zustand niedriger ist als die Betriebsfrequenz, und dass der sich ergebende Oberschwingungs anteil erheblich reduziert wird. Innerhalb einer Periode der angelegten Wechselspannung ändert sich die Kapazität des Ozonerzeugers also insgesamt zweimal, wobei die Eigenfrequenz des Systems einmal unterhalb und einmal oberhalb der Betriebsfrequenz liegt. Bei richtiger Auslegung der Induktivität erreicht man eine Spannung am Ozonerzeuger, die wesentlich über der Spannung an der Hochspannungsquelle, gegebenenfalls sogar über deren doppeltem Wert liegt und dabei einen fast sinusförmigen Verlauf des Stromes ergibt. Es verschwinden die Oberwellen im Strom fast vollständig, und man erhält eine günstige Belastung der Hochspannungsquelle.

Die beim Bekannten vorgesehene Kompensation der kapazitiven Belastung der Spannungsquelle ist nur in einem vergleichsweise kleinen Leistungsdichte-Bereich wirksam. Darüber hinaus versagt die vorgeschlagene Dimensionierung der Induktivität bei stromrichtergespeisten Ozonerzeugern.

Ausgehend vom vorstehend geschilderten Stand der Technik, insbesondere nach der DE-OS 21 11 041, liegt der Erfindung, wie sie in den Patentansprüchen gekennzeichnet ist, die Aufgabe zugrunde, eine Einrichtung zur Ozonerzeugung zu schaffen und ein Verfahren zu deren Betrieb anzugeben, welche einen Betrieb in einem weiten Leistungsdichte-Bereich ermöglicht, eine Verbesserung des Leistungsfaktors bei höheren Frequenzen und den Einsatz wirtschaftlicher Wechselrichter ermöglicht.

Die Erfindung und die der Erfindung zugrundeliegenden Erkenntnisse und ihre Vorteile werden nachstehend anhand der Zeichnung näher erläutert.

In der Zeichnung zeigt:

Fig. 1  eine schematische Darstellung einer Einrichtung zur Ozonerzeugung mit Umrichterspeisung,

Fig. 2  Darstellungen des zeitlichen Verlaufs von Spannung und Strom am Ozonerzeuger bei unterschiedlichen Kompensationen,

Fig. 3  eine mögliche Frequenzsteuerung des Wechselrichters bei starker Kompensation,

Fig. 4  die Abhängigkeit zwischen Sekundärstrom des Hochspannungstransformators und Induktivität der Kompensationsdrossel,

Fig. 5  eine Gegenüberstellung des spezifischen Energiebedarfs bei unterschiedlicher Kompensation,

Fig. 6a bis 6c  eine Reihe von Schaltungsvarianten zur Verbesserung bzw. Optimierung der Startphase.

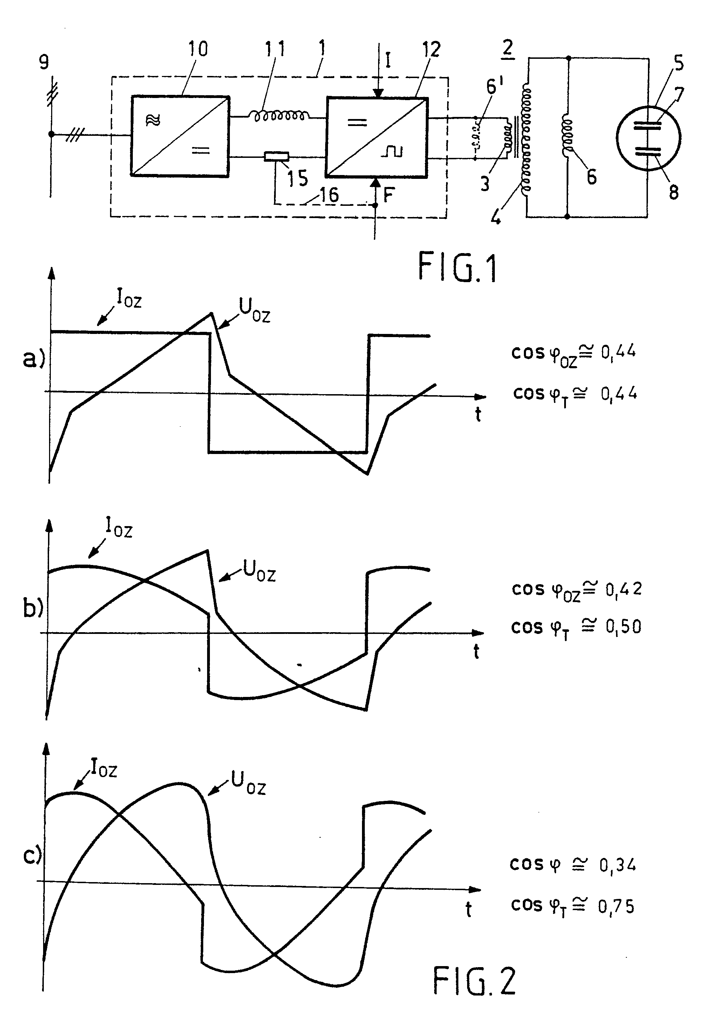

Das in Fig. 1 dargestellte Ausführungsbeispiel einer Einrichtung zur Erzeugung von Ozon umfasst im wesentlichen einen Umrichter 1, einen Hochspannungstransformator 2 mit Primärwicklung 3 und Sekundärwicklung 4 und den eigentlichen Ozonerzeuger 5, symbolisiert durch sein vereinfachtes Ersatzschaltbild. Parallel zu den Sekundärklemmen des Hochspannungstransformators 2 und damit auch parallel zum Ozonerzeuger liegt eine Kompensationsdrossel 6.

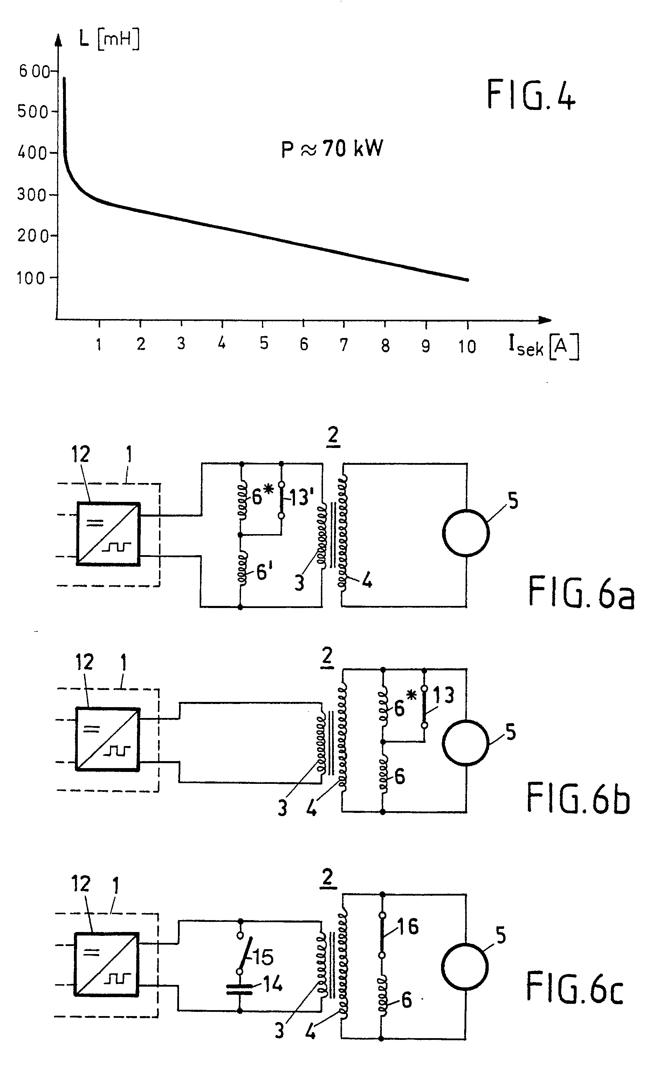

Im Ozonerzeuger 5 repräsentiert ein erster Kondensator 7 die Kapazität des Dielektrikums, ein zweiter Kondensator 8 die Kapazität der Gasstrecke zwischen Dielektrikum und Gegenelektrode. Der eigentliche Aufbau des Ozonerzeugers 5 entspricht dem Stand der Technik, z.B. nach der eingangs genannten DE-OS 21 11 041, und braucht aus diesem Grunde nicht näher erläutert zu werden. Gleiches gilt für den Hochspannungstransformator 2. Der gleichfalls zum Stand der Technik zu zählende Umrichter 1 umfasst im wesentlichen einen aus einem technischen 3-Phasen-Netz 9 gespeisten netzgeführten Gleichrichter 10, der über eine Glättungsdrossel 11 an einen lastgeführten Wechselrichter 12 angeschlossen ist. Frequenz und Amplitude des rechteckförmigen Ausgangsstromes des als Stromquelle wirkenden Umrichters sind in weiten Grenzen extern einstellbar, symbolisiert durch die Pfeile F und I. Nähere Einzelheiten des netzgeführten Gleichrichters sind z.B. in der Firmenschrift "Veritron-Stromwandler Typenreihe ASD", Druckschrift Nr. DHS 261481D, undatiert, der Anmelderin beschrieben. Beim lastgeführten Wechselrichter handelt es sich gleichfalls um eine bekannte Einrichtung, wie sie beispielsweise in der DE-B-25 25 580, dort Fig. 6 in Verbindung mit dem zugehörigen Text in Spalte 4, beschrieben ist.

Beim Betrieb des Ozonisators muss der hohe kapazitive Blindwiderstand durch Hinzufügen eines entsprechend dimensionierten induktiven Blindwiderstandes kompensiert werden. In Fig. 1 ist für diesen Zweck die parallel zu den Sekundärwicklungsklemmen des Hochspannungstransformators 2 geschaltete Kompensationsdrossel 6 vorgesehen.

Eine grosse Induktivität der Drossel 6 ergibt eine nur geringe Verbesserung des Leistungsfaktors am Hochspannungstransformator 2, während eine kleine Induktivität den Leistungsfaktor stark verbessert. Begrenzt wird die Kompensation durch die kapazitive Energie, die der Wechselrichter zur Kommutation benötigt. Strom und Spannungsform (Linien $I_{OZ}$ bzw. $U_{OZ}$) am Ozonerzeuger ändern sich ebenfalls mit zunehmender Kompensation. Dies ist in Fig. 2 veranschaulicht, in der die Fig. 2a Strom- und Spannungsform für den unkompensierten Zustand, etwa nach der DE-AS 25 25 059, wiedergibt, während die Figuren b) und c) die Verhältnisse bei geringer bzw. starker Kompensation verdeutlichen.

Sowohl Spannung als auch Strom nähern sich mit stärkerer Kompensation der Sinusform (Fig. 2c), wobei allerdings der Sprung im Stromsignal, welcher vom speisenden Rechteckstrom vom Transformator 2 herrührt, erhalten bleibt.

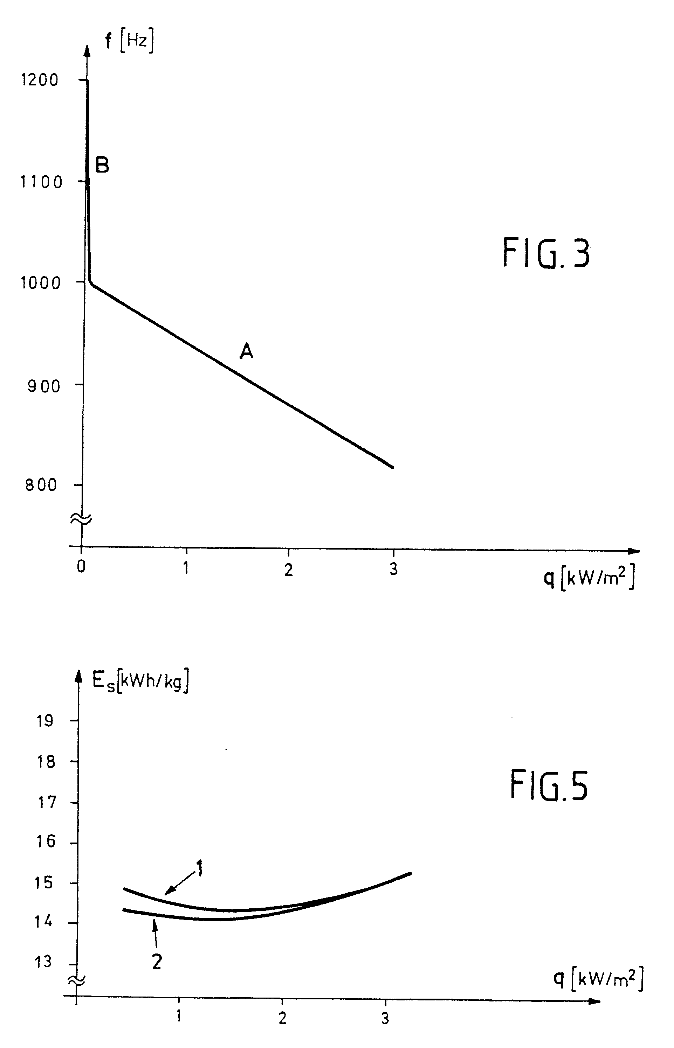

Solange dieser Sprung die O-Linie schneidet - dies ist ohne oder bei nur geringer Kompensation der Fall - kann die Anspeisung ohne weiteres gestartet und bis zur maximalen Leistungsabgabe gefahren werden. Der Leistungsfaktor nimmt mit abnehmender Leistungsdichte q ebenfalls ab. Schneidet der Sprung im Stromsignal die O-Linie hingegen nicht mehr (starke Kompensation), so nimmt der Leistungsfaktor mit abnehmender Leistungsdichte q zu. Die stille Entladung im Ozonerzeuger verlöscht bevor der Rechteckstrom am Trafo das Vorzeichen wechselt. Die Anspeisung kann in diesem Fall nur gestartet und bei kleinen Leistungsdichten betrieben werden wenn die Kompensation verkleinert wird. Eine erfindungsgemässe Variation der Kompensation durch eine Variation der Frequenz f zeigt Fig. 3. Sie lässt sich sehr einfach realisieren, weil im Arbeitsbereich (Abschnitt A der Kurve in Fig. 3) des Ozonerzeugers eine lineare Abhängigkeit zwischen Frequenz und Leistungsdichte 9 (kW/m² Elektrodenoberfläche) besteht. Diese Möglichkeit ist in Fig. 1 veranschaulicht: Im Gleichstromzwischenkreis wird mit einer Strommesseinrichtung 15 der dort fliessende Strom erfasst, der über die gestrichelt gezeichnete Wirkverbindung 16 den Frequenzsteuereingang F des Wechselrichters 12 beaufschlagt. Trotz nicht-rechteckförmigem Strom am Ozonerzeuger und dadurch nicht linearem Anstieg der Spannung verschlechtert sich der spezifische Energiebedarf $E_S$ (Kilowattstundenpro Kilogramm erzeugten Ozons) nicht.

In Fig. 5 ist dargestellt, wie sich die Erfindung insbesondere bei kleinen Leistungsdichten q auf den spezifischen Energiebedarf $E_S$ auswirkt. Die Kurve 1 repräsentiert dabei den unkompensierten, Kurve 2 den kompensierten Fall.

Die Induktivität L der Kompensationsdrossel 6 ergibt sich aus der folgenden Näherungsformel:

$$L = \frac{U^2_{eff}}{2\pi \cdot f \cdot P_W \cdot k},$$

wobei $U_{eff}$ die Effektiv-Spannung am Ozonerzeuger 5, $P_W$ die Leistung am Ozonerzeuger, f die Frequenz des Speisestroms und k eine ozonerzeugerspezifische und von $P_W$ abhängigeGrösse ist, die zwischen den Werten 0,5 und 1,5 liegt. Die leistungsabhängigen (d.h. von der Grösse der Kapazität C des Ozonerzeugers 5) Induktivitätswerte L liegen bei Ozonerzeugern mit Leistungen um 500 kW zwischen 1 mH und 50 mH, bei solchen mit Leistungen um 50 kW zwischen 10 mH und 500 mH.

Die obigen Richtwerte gelten für eine Kompensationsschaltung gemäss Fig. 1, also mit einer Kompensationsdrossel 6 auf der Sekundärseite des Hochspannungstransformators 2. Wie in Fig. 1 angedeutet ist, lässt sich die Kompensation aber auch durch Parallelschaltung einer Kompensationsdrossel 6' am Umrichterausgang (strichliert) bewerkstelligen.

Beide Kompensationsanordnungen weisen eine Reihe von Vorteilen auf. Bei der primärseitigen Kompensation kann eine Kompensationsdrossel 6' mit geringerer Induktivität und geringerer Isolation verwendet werden. Die Bauleistung des Hochspannungstransformators 2 wird jedoch grösser und es treten in ihm höhere Verluste auf. Bei der sekundärseitigen Kompensation wird die Induktivität L der Drossel 6 zwar grösser und die Drossel muss für Hochspannung ausgelegt sein, doch wird dafür die Bauleistung des Hochspannungstransformators kleiner, und es treten weniger Verluste auf.

Die wesentlichen Merkmale und Vorteile der Erfindung lassen sich wie folgt zusammenfassen:

- Die Kompensation hat auf den Wirkungsgrad keinen negativen Einfluss, bei kleinen Leistungsdichten führt die Kompensation sogar zu einer Verbesserung des Wirkungsgrades.
- Spannung und Strom am Ozonerzeuger werden mit zunehmender Kompensation immer sinusförmiger (Fig. 2c). Der Sprung, gegeben durch den ursprünglichen - und am Hochspannungstransformator noch vorhandenen - Rechteckstrom, bleibt aber erhalten.
- Mit zunehmender Kompensation nimmt die Effektiv-Spannung am Ozonerzeuger zu und der cos $\phi$ am Ozonerzeuger ab.
- Bei starker Kompensation (cos $\phi \geq 0,6$) verlöscht der Ozonerzeuger, bevor der Rechteckstrom am Hochspannungstransformator 2 das Vorzeichen ändert. - Bei schwacher Kompensation (wie auch ohne Kompensation) nimmt der cos $\phi$ mit abnehmender Leistungsdichte q ab. Ein Starten des Umrichters ist dann immer möglich. Bei starker Kompensation (cos $\phi \geq 0,6$) nimmt der cos $\phi$ mit abnehmender Leistungsdichte zu. Ein Starten des Umrichters ist in diesem Falle nur möglich, wenn die Frequenz erhöht wird (Fig. 3).
- Normalerweise wird zum Starten des Wechselrichters 12 eine Hilfseinrichtung (Starteinheit) eingesetzt. Bei Anlagen ohne Kompensation kann diese Hilfseinrichtung entfallen, wenn im Gleichstromzwischenkreis ein bestimmter Grundstrom eingestellt wird (1/10 des Nenngleichstromes ist ein günstiger Wert), damit genügend Kommutierungsenergie für das Anschwingen des Wechselrichters 12 sichergestellt ist. Bei Anlagen mit Kompensation führt diese Methode nicht immer zu einem sicheren Anschwingen (Starten), da der aus Kompensationsdrossel und Ozonerzeuger 5 bestehende Schwingkreis aufgrund seiner Eigenresonanz den Startvorgang stört. Dieser Nachteil kann durch eine geeignete, auf die Resonanzfrequenz abgestimmte Startfrequenz behoben werden. Vorteilhaft ist es auch den Grundstrom während des Startens von sehr kleinen Werten (vorteilhaft 1/100 bis 1/30) allmählich auf den gewünschten Betriebsstrom zu erhöhen. Weitere mögliche Lösungen zum Starten des Wechselrichters sind:
  - Zuschalten einer weiteren Kompensationsdrossel 6* in Serie zur bestehenden Drossel 6 bzw. 6' (schwächere Kompensation). Diese Drossel 6* wird nach dem Start kurzgeschlossen mittels Schalter 13 bzw. 13' (Fig. 6a bzw. 6b).

- Zuschalten von Parallelkapazitäten während des Startvorganges (schwächere Kompensation). Wegen des tieferen Spannungsniveaus ist es vorteilhaft den oder die Kondensatoren 14 und den zugehörigen Schalter 15 auf der Primärseite des Hochspannungstrafos 2 anzuordnen (Fig. 6c).

- Ersatz der Kompensationsdrossel mit fester Induktivität durch eine solche mit stromabhängiger Induktivität gemäss Fig. 4 (Isthmusdrossel). Dadurch könnte auch die Frequenzsteuerung des Wechselrichters entfallen.

- Zuschalten der Kompensationsdrossel (6, 6') mittels Schalter 16 nachdem der Wechselrichter 12 bereits läuft (rechte Hälfte von Fig. 6c).

- Erhöhen der Frequenz des Wechselrichters 12, vorteilhaft um etwa 50 % (Kurvenabschnitt B in Fig. 3).

- Mit den heute erhältlichen Thyristoren kommutiert ein lastgeführter Wechselrichter 12 noch bis zu einem $\cos \phi \cong 0,85$. Bis zu diesem $\cos \phi$ ist auch eine Kompensation möglich. Bei kleineren Leistungen ist diese Grenze höher und kann Werte bis $\cos \phi = 0,9$ erreichen.

- Da die Induktivität L der Kompensationsdrossel 6 umgekehrt proportional zur Grösse des Ozonerzeugers ist ( $\omega^2 = = 1/LC$, wobei C die Kapazität des Ozonerzeugers 5 ist und proportional zu seiner Grösse zunimmt), lohnt sich eine Kompensation erst ab einer bestimmten Mindestgrösse des Ozonerzeugers. Für eine 60 kW Anlage (10 kg $O_3$/h aus $O_2$, Kompensation auf $\cos \phi = 0,57$) ergab sich, dass der Hochspannungstransformator 2, die Kompensationsdrossel 6 und die Gleichstromdrossel 11 im Zwischenkreis des Umrichters 1 zusammen billiger sind, als ein Hochspannungstransformator und eine Gleichstromdrossel im unkompensierten Fall. Hinzu kommen noch bedeutende Einsparungen beim Wechselrichter 12, Gleichrichter 10 und der netzseitigen Kompensation.

- Obschon die Netzseite des Umrichters 1 von der Verbraucherseite durch den Gleichstromzwischenkreis entkoppelt ist, führt die Kompensationsdrossel 6 auch zu einer Verbesserung des netzseitigen $\cos \phi_N$ um etwa 20 %, da der Gleichrichter in einem günstigeren Arbeitsbereich betrieben wird.

**Patentansprüche**

1. Einrichtung zur Ozonerzeugung
    a) mit einem Umrichter (1) zur Erzeugung eines frequenzvariablen Rechteckstromes,
    b) der wechselrichterseitig mit der Niederspannungs- bzw. Primärseite eines Hochspannungstransfomators (2) in Wirkverbindung steht,
    c) mit mindestens einem Ozonerzeuger (5), der zwischen seinen Elektroden mindestens ein festes Dielektrikum (7) und eine Gasstrecke (8) aufweist und mit der Hochspannungs- bzw. Sekundärseite des Hochspannungstransformators (2) elektrisch verbunden ist, und
    d) mit mindestens einer Kompensationsdrossel (6, 6', 6*) zur Kompensation der kapazitiven Belastung der Stromversorgung in einem Parallelzweig zu mindestens einer Seite des Hochspannungstransformators (2),
dadurch gekennzeichnet,
    e) dass mindestens eine Kompensationsdrossel (6) oder ein Teil der Kompensationsdrossel mit einem Schaltelement (16, 13, 13') in Reihe geschaltet ist (Fig. 6a - 6c) und
    f) dass der Umrichter (1) einen Rechteckstrom variabler Amplitude erzeugt.

2. Einrichtung zur Ozonerzeugung
    a) mit einem Umrichter (1) zur Erzeugung eines frequenzvariablen Rechteckstromes,
    b) der wechselrichterseitig mit der Niederspannungs-bzw. Primärseite eines Hochspannungstransformators (2) in Wirkverbindung steht,
    c) mit mindestens einem Ozonerzeuger (5), der zwischen seinen Elektroden mindestens ein festes Dielektrikum (7) und eine Gasstrecke (8) aufweist und mit der Hochspannungs- bzw. Sekundärseite des Hochspannungstransformators (2) elektrisch verbunden ist, und
    d) mit mindestens einer Kompensationsdrossel (6, 6', 6*) zur Kompensation der kapazitiven Belastung der Stromversorgung in einem Parallelzweig zu mindestens einer Seite des Hochspannungstransformators (2),
dadurch gekennzeichnet,
    e) dass die mindestens eine Kompensationsdrossel (6, 6', 6*) eine Isthmusdrossel ist und
    f) dass der Umrichter (1) einen Rechteckstrom variabler Amplitude erzeugt.

3. Einrichtung nach Anspruch 2, dadurch gekennzeichnet, dass mindestens eine Kompensationsdrossel (6) oder ein Teil der Kompensationsdrossel mit einem Schaltelement (16, 13, 13') in Reihe geschaltet ist (Fig. 6a - 6c).

4. Einrichtung nach Anspruch 1 oder 3, dadurch gekennzeichnet, dass ein Teil der Kompensationsdrossel oder eine weitere Kompensationsdrossel (6*) zu dem Schaltelement (13, 13') parallelgeschaltet ist (Fig. 6b, 6a).

5. Einrichtung nach einem der Ansprüche 1 bis 4, dadurch gekennzeichnet, dass in einem Parallelzweig zu der Primärseite des Hochspannungstransformators (2) ein Kondensator (14) mit einem Schaltelement (15) in Reihe geschaltet ist.

6. Einrichtung nach einem der Ansprüche 1 bis 5, dadurch gekennzeichnet,
a) dass die Induktivität (L) der mindestens einen Kompensationsdrossel (6, 6', 6*) in einem Parallelzweig zur Sekundärseite des Hochspannungstransformators (2) gemäss:

$$L = U^2_{eff}/(2 . \pi . f . P_W . k) \text{ oder}$$

b) in einem Parallelzweig zur Primärseite des Hochspannungstransformators (2) gemäss:

$$L = U^2_{eff}/(2 . \pi . f . P_W . k \ddot{u}^2)$$

gewählt ist, mit $U_{eff}$ = Spannung am Ozonerzeuger (5), $P_W$ = Leistung am Ozonerzeuger (5), f = Frequenz des Speisestromes, k = ozonerzeugungsspezifische, im wesentlichen von $P_W$ abhängige Grösse zwischen 0,5 und 1,5 sowie ü = übersetzungsverhältnis von der Hochspannungsseite zur Niederspannungsseite des Hochspannungstransformators (2).

7. Verfahren zum Betrieb eines Ozonerzeugers (5), dadurch gekennzeichnet,
a) dass die Betriebsfrequenz des Ozonerzeugers (5) bzw. die Frequenz (f) des Ausgangsstromes des Stromrichters (1) stromabhängig derart gesteuert wird, dass die Resonanzfrequenz eines im wesentlichen aus dem Ozonerzeuger (5) und der mindestens einen Kompensationsdrossel (6, 6', 6*) bestehenden Resonanzkreises in jedem Betriebszustand unterhalb dieser Betriebsfrequenz (f) liegt und
b) dass der Umrichter (1) mit einem sehr kleinen Grundstrom gestartet wird, der allmählich auf den gewünschten Betriebsstrom erhöht wird.

8. Verfahren nach Anspruch 7, dadurch gekennzeichnet, dass in der Startphase des Umrichters (1) dessen Ausgangsfrequenz (f) um annähernd 50 % gegenüber der regulären Betriebsphase erhöht und danach reduziert wird.

9. Verfahren nach Anspruch 7, dadurch gekennzeichnet, dass in der regulären Phase des Umrichters (1) bei einem Leistungsfaktor cos φ = 0,6 dessen Frequenz (f) mit zunehmendem Ausgangsstrom erniedrigt wird (Fig. 3, Abschnitt A).

10. Verfahren nach einem der Ansprüche 7 bis 9, dadurch gekennzeichnet, dass der Umrichter (1) mit einem Grundstrom zwischen 1/100 bis 1/30 des Nennstromes gestartet wird.

11. Verfahren nach einem der Ansprüche 7 bis 10, dadurch gekennzeichnet, dass vor dem Starten des Umrichters (1) eine weitere Drossel (6*) in Reihe zu mindestens einer Kompensationsdrossel (6) geschaltet und in der Betriebsphase diese weitere Drossel (6) überbrückt wird.

12. Verfahren nach einem der Ansprüche 7 bis 11, dadurch gekennzeichnet, dass vor dem Starten des Umrichters (1) insbesondere auf der Primärseite des Hochspannungstransformators (2) ein Parallelkondensator (14) zugeschaltet wird, welcher in der Betriebsphase des Umrichters (1) wieder eingeschaltet wird.

13. Verfahren nach einem der Ansprüche 7 bis 12, dadurch gekennzeichnet, dass die Kompensationsdrossel (6) in der Startphase des Umrichters (1) abgeschaltet und erst in der Betriebsphase zugeschaltet wird.

**Claims**

1. Device for generating ozone
a) having a frequency converter (1) for generating a variable-frequency square-wave current
b) which is actively connected on the converter side to the low-voltage or primary side of a high-voltage transformer (2)
c) having at least one ozone generator (5) which has a solid dielectric (7) and a gas space (8) between its electrodes and is electrically connected to the high-voltage or secondary side of the high-voltage transformer (2), and
d) having at least one compensation choke (6, 6', 6*) for compensating the capacitive load of the power supply in a parallel branch to at least one side of the high-voltage transformer (2), characterised in that

e) at least one compensation choke (6) or a part of the compensation choke is connected in series with a switching element (16, 13, 13') (Figs. 6a - 6c), and in that

f) the frequency converter (1) generates a square-wave current of variable amplitude.

2. Device for generating ozone

a) having a frequency converter (1) for generating a variable-frequency square-wave current

b) which is actively connected on the converter side to the low-voltage or primary side of a high-voltage transformer (2)

c) having at least one ozone generator (5) which has a solid dielectric (7) and a gas space (8) between its electrodes and is electrically connected to the high-voltage or secondary side of the high-voltage transformer (2), and

d) having at least one compensation choke (6, 6', 6*) for compensating the capacitive load of the power supply in a parallel branch to at least one side of the high-voltage transformer (2), characterised in that

e) the at least one compensation choke (6, 6', 6*) is an isthmus choke, and in that

f) the frequency converter (1) generates a square-wave current of variable amplitude.

3. Device according to Claim 2, characterised in that at least one compensation choke (6) or a part of the compensation choke is connected in series with a switching element (16, 13, 13') (Figs. 6a - 6c).

4. Device according to Claim 1 or 3, characterised in that a part of the compensation choke or a further compensation choke (6*) is connected in parallel to the switching element (13, 13') (Figs. 6b, 6a).

5. Device according to one of Claims 1 to 4, characterised in that a capacitor (14) is connected in series with a switching element (15) in a parallel branch to the primary side of the high-voltage transformer (2).

6. Device according to one of Claims 1 to 5, characterised in that

a) the inductance (L) of the at least one compensation choke (6, 6', 6*) in a parallel branch to the secondary side of the high-voltage transformer (2) is selected in accordance with:

$$L = U^2_{eff}/(2 \cdot \pi \cdot f \cdot P_W \cdot k) \text{ or}$$

b) in a parallel branch to the primary side of the high-voltage transformer (2) in accordance with:

$$L = U^2_{eff}/(2 \cdot \pi \cdot f \cdot P_W \cdot k \cdot t^2)$$

where $U_{eff}$ denotes the voltage at the ozone generator (5), $P_W$ denotes the output at the ozone generator (5), f denotes the frequency of the supply current, k denotes an ozone generation-specific quantity which is essentially dependent on $P_W$ and is between 0.5 and 1.5, and t denotes the translation ratio from the high-voltage side to the low-voltage side of the high-voltage transformer (2).

7. Process for operating an ozone generator (5), characterised in that

a) the operating frequency of the ozone generator (5) or the frequency (f) of the output current of the power converter (1) is controlled, dependent on the current, in such a manner that the resonant frequency of a resonant circuit essentially comprising the ozone generator (5) and the at least one compensation choke (6, 6', 6*) is below this operating frequency (f) in all operating states, and in that

b) the frequency converter (1) is started with a very low base current which is gradually increased to the desired operating current.

8. Process according to Claim 7, characterised in that the initial frequency (f) of the frequency converter (1) is, in the start phase, increased by approximately 50% compared with the regular operating phase and is then reduced.

9. Process according to Claim 7, characterised in that the frequency (f) of the frequency converter (1) is reduced with increasing initial current in the regular phase at a power factor cos $\phi = 0.6$ (Fig. 3, Section A).

10. Process according to one of Claims 7 to 9, characterized in that the frequency converter (1) is started with a base current of between 1/100 to 1/30 of the nominal current.

11. Process according to one of Claims 7 to 10, characterized in that, before starting the frequency converter (1), a further choke (6*) is connected in series to at least one compensation choke (6) and this further choke (6) is bridged in the operating phase.

12. Process according to one of Claims 7 to 11, characterized in that, before starting the frequency converter (1), a parallel capacitor (14) is switched into the circuit, in particular on the primary side of the high-voltage transformer (2), and is switched out of the circuit again in the operating phase of the converter (1).

13. Process according to one of Claims 7 to 12, characterized in that the compensation choke (6) is switched out of the circuit in the start phase of the frequency converter (1) and is not switched into the circuit again until the operating phase.

## Revendications

1. Dispositif de production d'ozone
   a) comportant un convertisseur (1) destiné à produire un courant rectangulaire variable en fréquence;
   b) qui, du côté onduleur, est en liaison active avec le côté basse tension ou primaire d'un transformateur haute tension (2);
   c) comportant au moins un générateur d'ozone (5) qui présente, entre ses électrodes, au moins un diélectrique solide (7) et un espace rempli de gaz (8) et qui est connecté électriquement au côté haute tension ou secondaire du transformateur haute tension (2), et
   d) comportant au moins une bobine de compensation (6, 6', 6*) pour compenser la sollicitation capacitive de l'alimentation de courant dans une branche parallèle vers au moins un côté du transformateur haute tension (2), caractérisé en ce que :
   e) au moins une bobine de compensation (6) ou une partie de la bobine de compensation est connectée en série avec un élément de commutation (16, 13, 13') (Fig. 6a à 6c), et
   f) le convertisseur (1) produit un courant rectangulaire d'amplitude variable.

2. Dispositif de production d'ozone
   a) comportant un convertisseur (1) destiné à produire un courant rectangulaire variable en fréquence;
   b) qui, du côté onduleur, est en liaison active avec le côté basse tension ou primaire d'un transformateur haute tension (2);
   c) comportant au moins un générateur d'ozone (5) qui présente, entre ses électrodes, au moins un diélectrique solide (7) et un espace rempli de gaz (8) et qui est connecté électriquement au côté haute tension ou secondaire du transformateur haute tension (2), et
   d) comportant au moins une bobine de compensation (6, 6', 6*) pour compenser la sollicitation capacitive de l'alimentation de courant dans une branche parallèle vers au moins un côté du transformateur haute tension (2), caractérisé en ce que :
   e) au moins une bobine de compensation (6, 6', 6*) est une bobine isthmique, et
   f) le convertisseur (1) produit un courant rectangulaire d'amplitude variable.

3. Dispositif suivant la revendication 2, caractérisé en ce qu'au moins une bobine de compensation (6) ou une partie de la bobine de compensation est connectée en série avec un élément de commutation (16, 13, 13') (Fig. 6a à 6c).

4. Dispositif suivant la revendication 1 ou 3, caractérisé en ce qu'une partie de la bobine de compensation ou une autre bobine de compensation (6*) est montée en parallèle avec l'élément de commutation (13, 13') (Fig. 6b, 6a).

5. Dispositif suivant l'une quelconque des revendications 1 à 4, caractérisé en ce que dans une branche parallèle au primaire du transformateur haute tension (2), un condensateur (14) est connecté en série avec un élément de commutation (15).

6. Dispositif suivant l'une quelconque des revendications 1 à 5, caractérisé en ce que :
   a) l'inductance (L) de ladite au moins une bobine de compensation (6, 6', 6*) est choisie dans une branche parallèle au secondaire du transformateur haute tension (2) selon l'équation :

$$L = \frac{U^2_{eff}}{(2 . \pi . f . P_u . k)} \quad ou$$

   b) dans une branche parallèle au primaire du transformateur haute tension (2) selon l'équation :

$$L = \frac{U^2_{eff}}{(2.\pi.f.P_w.k.U^2)}$$

où $U_{eff}$ = tension au niveau du générateur d'ozone (5), $P_W$ = puissance au niveau du générateur d'ozone (5), f = fréquence du courant d'alimentation, k = une grandeur spécifique à la production d'ozone dépendant essentiellement de $P_W$, comprise entre 0,5 et 1,5, et U = rapport de transformation entre le côté haute tension et le côté basse tension du transformateur haute tension (2).

7. Procédé de mise en oeuvre d'un générateur d'ozone (5), caractérisé en ce que :

a) la fréquence de fonctionnement du générateur d'ozone (5) ou la fréquence (f) du courant de sortie du convertisseur (1) est commandée en fonction de l'intensité, de manière telle que la fréquence de résonance d'un circuit résonant constitué en substance du générateur d'ozone (5) et de ladite au moins une bobine de compensation (6, 6', 6*) est, dans chaque état de fonctionnement, située en dessous de cette fréquence de fonctionnement (f), et

b) le convertisseur (1) démarre avec un courant de base très faible qui est augmenté progressivement jusqu'à l'intensité de fonctionnement souhaitée.

8. Procédé suivant la revendication 7, caractérisé en ce que, dans la phase de démarrage du convertisseur (1) sa fréquence de départ (f) est augmentée d'à peu près 50% par rapport à la phase de fonctionnement régulière et est ensuite abaissée.

9. Procédé suivant la revendication 7, caractérisé en ce que, dans la phase régulière du convertisseur (1), pour un facteur de puissance cos$\phi$ = 0,6, sa fréquence (f) est abaissée à mesure que le courant de départ augmente (Fig. 3, section A).

10. Procédé suivant l'une quelconque des revendications 7 à 9, caractérisé en ce que le convertisseur (1) démarre avec un courant de base compris entre 1/100 et 1/30 de l'intensité nominale.

11. Procédé suivant l'une quelconque des revendications 7 à 10, caractérisé en ce qu'avant le démarrage du convertisseur (1), une autre bobine (6*) est connectée en série avec au moins une bobine de compensation (6) et est pontée au cours de la phase de fonctionnement.

12. Procédé suivant l'une quelconque des revendications 7 à 11, caractérisé en ce qu'avant le démarrage du convertisseur (1), est mis en circuit, en particulier du côté du primaire du transformateur haute tension (2), un condensateur parallèle (14) qui est réenclenché dans la phase de fonctionnement du convertisseur (1).

13. Procédé suivant l'une quelconque des revendications 7 à 12, caractérisé en ce que la bobine de compensation (6) est déclenchée dans la phase de démarrage du convertisseur (1) et n'est mise en circuit que dans la phase de fonctionnement.

FIG.1

a)   $\cos \varphi_{OZ} \cong 0,44$

$\cos \varphi_{T} \cong 0,44$

b)   $\cos \varphi_{OZ} \cong 0,42$

$\cos \varphi_{T} \cong 0,50$

c)   $\cos \varphi \cong 0,34$

$\cos \varphi_{T} \cong 0,75$

FIG.2

FIG.3

FIG.5

FIG.4

$P \approx 70$ kW

FIG.6a

FIG.6b

FIG.6c